# EUROPÄISCHE PATENTSCHRIFT

(11) **EP 1 295 520 B1**
(45) Veröffentlichungstag und Bekanntmachung des Hinweises auf die Patenterteilung: **25.11.2009**
(21) Anmeldenummer: 02020852.6
(22) Anmeldetag: 18.09.2002
(51) Int. Cl.: A01B 33/08

(54) **Kreiselegge mit verbessertem Rotorantrieb**
Rotary harrow with improved rotor driving
Herse rotative à entrainement du rotor amélioré

(30) Priorität: 21.09.2001 DE 10146571; 26.03.2002 DE 10213400
(43) Veröffentlichungstag der Anmeldung: 26.03.2003
(73) Patentinhaber: Lemken GmbH & Co. KG, 46519 Alpen (DE)
(72) Erfinder: Gebbeken, Martin, Dipl.-Ing., 46519 Alpen (DE); Giesen, Gottfried, Dipl.-Ing., 47495 Rheinberg (DE)
(74) Vertreter: Schulte, Jörg

(56) Entgegenhaltungen:
- FR-A- 2 322 519
- US-A- 4 111 266
- US-A- 4 136 742

## Beschreibung

Die Erfindung betrifft eine Kreiselegge mit Getriebewanne mit mindestens drei Stirnrädern, die verdrehfest mit Rotorwellen verbunden sind, die wiederum in der Getriebewanne über Lager gelagert sind, wobei die einzelnen Stirnräder nebeneinander angeordnet sind und miteinander im Eingriff stehen, mit einem Getriebe, das oberhalb der Getriebewanne angeordnet ist, wobei das Getriebe eine vertikal angeordnete, auf die Stirnräder einwirkende Antriebswelle aufweist.

Derartige Kreiseleggen weisen Getriebe mit vertikal angeordneter Antriebswelle auf, die in ihrem mittleren Bereich ein Stirnrad trägt, das die benachbarten Stirnräder antreibt. Endseitig weist die vertikal angeordnete Antriebswelle wie auch die übrigen Rotorwellen einen Zinkenträger mit Zinken auf, der in der Regel anders ausgebildet ist als die restlichen Zinkenträger.

Der europäischen Patentanmeldung EP 713 635 ist eine Kreiselegge zu entnehmen, bei der die senkrecht angeordnete Antriebswelle Ansätze aufweist, die in entsprechende Bohrungen eines Stirnrades eingreifen und so für eine formschlüssige Antriebsverbindung sorgen. Diese Anordnung ist sehr aufwendig und antriebstechnisch nicht abgesichert.

Zur Erzielung einer Drehrichtungsumkehr wird bei der DE-OS 36 29 774 ein Umkehrzahnradsatz eingesetzt, der aus zwei Hauptzahnrädern und einem Umkehrrad besteht. Nach der DE-OS 28 47 785 ist eine Drehrichtungsumkehr zu bewirken, in dem das Getriebe zwei nebeneinander angeordnete Eingangswellen aufweist, die hinsichtlich der Drehrichtung gegenläufig über im Getriebe angeordnete Zahnräder miteinander verbunden sind. Eine derartige Ausführungsform der Drehrichtungsumkehr ist zwar einfach, jedoch kann der hohe bauliche Aufwand der zusätzlichen Getriebeteile nicht in einem wirtschaftlichen Verhältnis mit dem Nutzen gesetzt werden.

Aufgabe der Erfindung ist es, eine vom Aufbau her einfache Kreiselegge zu schaffen, die zusätzlich bezüglich der Herstellkosten günstiger wird, ohne auf wichtige Funktionen verzichten zu müssen.

Die Aufgabe wird erfindungsgemäß gelöst, indem die vertikal angeordnete Antriebswelle versetzt zu den Rotorwellen angeordnet in die Getriebewanne hineinragt und endseitig ein Ritzel aufweist, das im Durchmesser kleiner ausgebildet ist als die Stirnräder, dass das Ritzel im Eingriff mit einem der benachbarten Stirnräder steht und dass die vertikal angeordnete Antriebswelle in Arbeitsrichtung der Kreiselegge vor oder hinter der Rotorwelle der benachbarten Stirnräder angeordnet ist und dass das Getriebe versetzbar auf der Getriebewanne angeordnet ist und zwar so, dass das Ritzel wechselweise mit dem einen Stirnrad oder dem anderen benachbarten Stirnrad in Eingriff stehend eine Drehrichtungsumkehr bewirkend ausgebildet ist.

Durch die nach vorn bzw. nach hinten versetzte Anordnung der Antriebswelle mit Ritzel können alle Stirnräder in der Getriebewanne gleich ausgebildet werden. Sonderlösungen für das erste Stirnrad oder die Rotorwellen sind nicht erforderlich. Die Kreiselegge erfüllt alle wichtigen Funktionen, ohne dass irgendwelche Zusätze o. Ä. benötigt werden. Mit Hilfe des versetzbaren Getriebes ist eine einfache Drehrichtungsumkehr zu erreichen. Durch diese erfindungsgemäße Lösung wird durch einfaches Versetzen des Getriebes in Relation zu den Stirnrädern eine Drehrichtungsumkehr der Werkzeugkreisel bewirkt. Dies ist insbesondere dann vorteilhaft, wenn z.B. Zinken eingesetzt werden, die in Drehrichtung mit ihrer Schneide zur Bodenoberfläche einen stumpfen oder einen spitzen Winkel einschließen. Durch den wechselweisen Eingriff des Ritzels mit einem der zuvor beschriebenen zueinander benachbarten Stirnräder kann auf einfachste Weise eine Drehrichtungsumkehr erfolgen.

Weiter sieht die Erfindung vor, dass die vertikal angeordnete Antriebswelle in Arbeitsrichtung vor oder hinter der ersten Rotorwelle des ersten Stirnrades angeordnet ist, und zwar um 5 cm bis 12 cm seitlich versetzt. Durch dieses Merkmal wird sichergestellt, dass die Abmessungen der Getriebewanne nicht verändert, vor allem nicht vergrößert werden müssen, um das seitlich an dem Stirnrad angrenzende Ritzel aufnehmen zu können.

Weiter ist erfindungsgemäß vorgesehen, dass die vertikal angeordnete Antriebswelle unmittelbar oberhalb des Ritzels gelagert und die Lagerung Bestandteil des Getriebes bzw. unmittelbar mit dem Getriebe verbunden ist. Diese Ausführungsform gewährleistet eine stabile Anordnung der Antriebswelle und des Ritzels. Ohne besondere Maßnahmen und Geschick kann bei der Montage das Getriebe mit Antriebswelle und Ritzel auf eine Getriebewanne mit Stirnrädern aufgebaut werden. Das reduziert Arbeits- und Montageaufwand und dadurch auch gleichzeitig die Herstellkosten.

Weiter sieht die Erfindung vor, dass die Rotorwelle an ihrem unteren Ende einen Zinkenträger für die Aufnahme von Zinken aufweist und dass die Rotorwelle und der Zinkenträger als ein Teil ausgebildet sind, vorzugsweise als geschmiedetes Teil.

Die Erfindung sieht weiter vor, dass das Getriebe in einer Kulissenführung geführt und in die jeweilige Eingriffsstellung verschiebbar ausgebildet ist. Die Kulissenführung ist eine einfach herzustellende bauliche Verbindung, die z.B. auch aus einfachen Langlöchern bestehen kann, die im Getriebeflansch untergebracht sind.

Erfindungsgemäß ist weiter vorgesehen, dass eine Parallelführung vorgesehen ist, über die das Getriebe parallel verschiebbar auf dem Räderkasten angeordnet ist. Durch diese parallele Führung des Getriebes wird bei einer Drehrichtungsumkehr zwar die seitliche Lage der Eingangswelle verändert, nicht aber ihre Winkellage in Relation zur Traktorzapfwelle. Die für den vibrationsfreien und verschleißarmen Betrieb einer Gelenkwelle wichtige parallele Lage der Eingangswelle zur Zapfwelle des Traktors wird so nicht verändert.

Die Erfindung sieht weiter vor, dass das Getriebe als Wechselradgetriebe ausgebildet ist. Durch diese Ausführungsform kann auch bei dem erfindungsgemäßen Getriebe eine einfache und kostengünstige Änderung der Übersetzung zwischen Eingangswelle und Antriebswelle bewirkt werden. Dazu werden lediglich Zahnräder gewechselt oder getauscht.

Die Erfindung sieht weiter vor, dass das Getriebe als Schaltgetriebe mit veränderbaren Getriebeübersetzungen ausgebildet ist. Mit dieser Ausbildung des Getriebes kann das robuste und kostengünstige Getriebe mit Drehrichtungsumkehr schnell und komfortabel den jeweils vorliegenden Einsatzbedingungen angepasst werden, z.B. eine hohe Werkzeugkreiseldrehzahl in schwierigen Bodenverhältnissen oder eine niedrige Werkzeugkreiseldrehzahl in leichten bis mittelschweren Bodenverhältnissen.

Die Erfindung sieht weiter vor, dass das Getriebe in seiner jeweiligen Eingriffsstellung arretierbar oder fixierbar ausgebildet ist. Mit einfachen Anschlägen, Spannteilen oder Arretierungen kann das Getriebe in der jeweiligen Eingriffsstellung arretiert werden, und zwar so, dass auch das Zahnflankenspiel zwischen dem Ritzel der Antriebswelle und dem jeweils im Einsatz befindlichen Stirnrad berücksichtigt und optimiert werden kann.

Dadurch, dass alle Bauteile wie Zahnräder, Rotorwellen mit Zinkenträgern und auch die Lagerungen für alle Einheiten gleich sind, reduzieren sich die Varianten und dadurch wiederum die Herstellkosten und die Montagekosten. Bei der Montage müssen weniger unterschiedliche Teile gehandhabt werden.

Insgesamt ist so weiter ein Bodenbearbeitungsgerät mit Werkzeugkreiseln und daran befestigten Zinken geschaffen, bei denen die in Drehrichtung der Werkzeugkreisel jeweils schräg angeordneten Zinken je nach Bedarf schleppend oder bei einer Drehrichtungsumkehr der Werkzeugkreisel den Boden aufbrechend auf Griff stehend angeordnet sind. Das robust konzipierte Bodenbearbeitungsgerät kann so in kürzester Zeit optimal auf die jeweils vorliegenden Verhältnisse angepasst werden.

Weitere Einzelheiten und Vorteile des Erfindungsgegenstandes ergeben sich aus der nachfolgenden Beschreibung und den zugehörigen Zeichnungen, in denen die notwendigen Einzelheiten dargestellt sind.

Es zeigen:
- Figur 1: eine Kreiselegge in Seitenansicht,
- Figur 2: einen Schnitt der Getriebewanne,
- Figur 3: einen Ausschnitt der Getriebewanne,
- Figur 4: einen Ausschnitt der Getriebewanne mit Getriebe,
- Figur 5: eine Detailansicht im Schnitt direkt oberhalb der Flanschkonsole,
- Figur 6: eine Funktionsskizze der Getriebewanne mit einer ersten Drehrichtung und
- Figur 7: eine weitere Funktionsskizze mit der zweiten Drehrichtung.

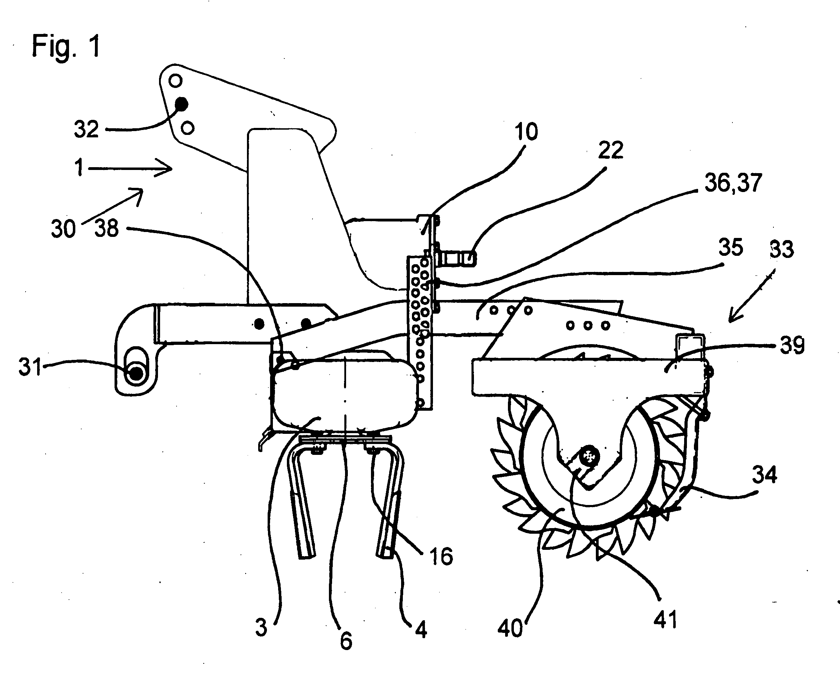

Figur 1 zeigt eine Kreiselegge (1) mit einer Getriebewanne (3). Auf der Getriebewanne (3) ist ein Dreipunktturm (30) angeordnet mit Oberlenkeranlenkpunkt (32) und Unterlenkeranlenkpunkten (31), die für die Verbindung mit einem nicht dargestellten Traktordreipunktgestänge dienen. Unterhalb der Getriebewanne (3) sind Zinkenträger (6) vorgesehen, die drehbar in der Getriebewanne gelagert sind. An den Zinkenträgern (6) sind Zinken (4) mittels Schrauben (16) befestigt.

Oberhalb der Getriebewanne (3) ist ein Getriebe (10) mit einer Eingangswelle (21) und einer Ausgangswelle (22) vorgesehen. Hinten an der Kreiselegge (1) ist eine Nachlaufwalze (33) angeordnet, die über Träger (35) und querliegende Achsen (38) schwenkbar mit der Kreiselegge (1) verbunden ist. Die Schwenkbarkeit der Träger (35) und damit der Nachlaufwalze (33) wird über eine Tiefeneinstellvorrichtung (36) mit Stiftverstellung (37) einstellbar begrenzt. Die Nachlaufwalze (33) weist einen Rahmen (39) auf, in dem der Walzenkörper (40) über die Lagerungen (41) gelagert ist. Sie ist mit Abstreifern (34) ausgerüstet.

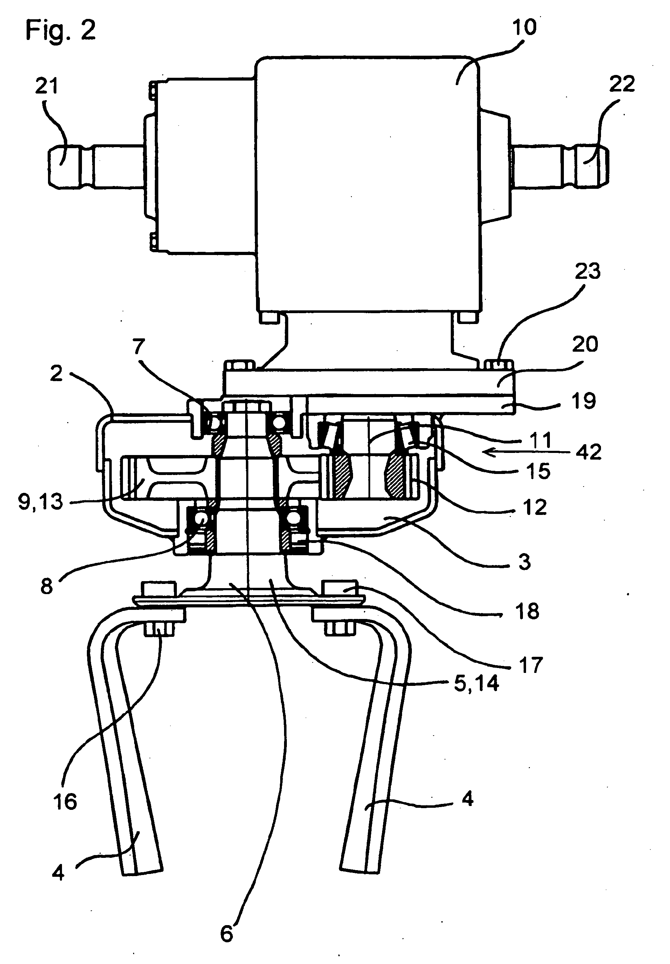

Figur 2 zeigt einen Schnitt der Getriebewanne (3). Auf der Getriebewanne (3) ist das Getriebe (10) angeordnet, das mit seinem Flansch (20) über Schrauben (23) mit der Flanschkonsole (19) der Getriebewanne (3) verschraubt ist. Das Getriebe (10) weist eine Eingangswelle (21) und eine Ausgangswelle (22) auf, die vorzugsweise eine Einheit bilden. Die Flanschkonsole (19) ist mit dem Gehäuse (2) der Getriebewanne (3) verschweißt. Das Getriebe (10) weist eine senkrechte Antriebswelle (11) mit einem endseitig angeordneten Ritzel (12) auf. Die senkrecht angeordnete Antriebswelle (11) mit dem Ritzel (12) steht im Eingriff mit einem Stirnrad (9), und zwar dem ersten Stirnrad (13). Die in die Getriebewanne (3) hineinragende Antriebswelle (11) ist direkt oberhalb der Ritzelwelle gelagert. Die Lagerung (15) ist Bestandteil des Getriebes (10) bzw. eines am Getriebe (10) angeordneten Bauteiles (42).

Die Getriebewanne (3) selbst weist oben die Lager (7) und unten die Lager (8) auf, in denen die Rotorwellen (5) drehbar gelagert sind. Unterhalb der Lager (8) ist eine Dichteinheit (18) vorgesehen. Die Rotorwelle (5) weist unten den Zinkenträger (6) auf und bildet zusammen mit dem Zinkenträger (6) eine geschmiedete Einheit. Am Zinkenträger (6) sind die Zinken (4) mittels Schrauben (16) und Muttern (17) verbunden.

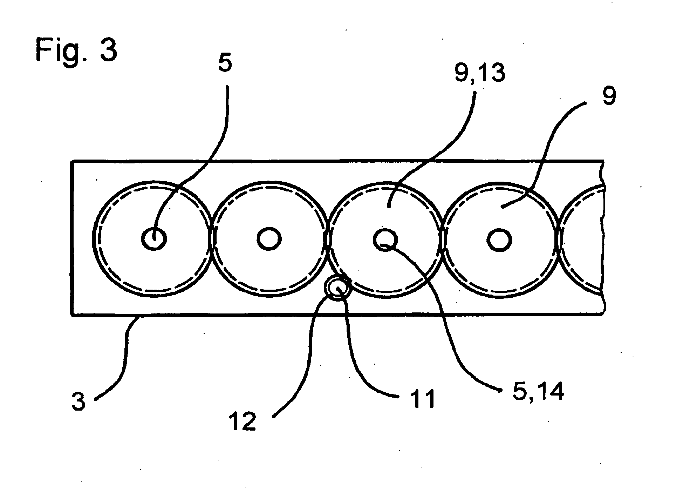

Figur 3 zeigt eine Ansicht der Getriebewanne (3). Sie verdeutlicht insbesondere, dass alle Stirnräder (9) und Rotorwellen (5) gleich ausgebildet sind. Die aus dem Getriebe (10) in die Getriebewanne (3) hineinragende Antriebswelle (11) mit Ritzel (12) ist oberhalb des Ritzels (12) gelagert. Aufgrund der besonderen Anordnung der Antriebswelle (11) und des Ritzels (12), können alle Stirnräder (9, 13) und auch Rotorwellen (5, 14) innerhalb der Getriebewanne (3) identisch ausgebildet sein. Die Getriebewanne (3) ist als eine geschlossene Einheit ausgebildet, die aufgrund dieser Bauweise besonders steif ist und damit die besten Voraussetzungen dafür bietet, dass ein optimaler Rundlauf der Stirnräder (9, 13) und dadurch eine extrem lange Lebensdauer der Stirnräder (9, 13) sichergestellt ist.

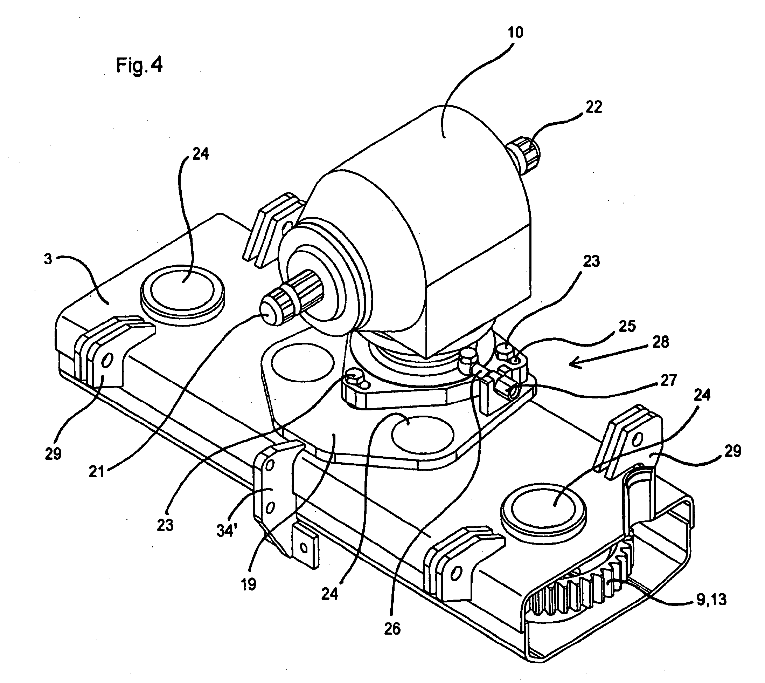

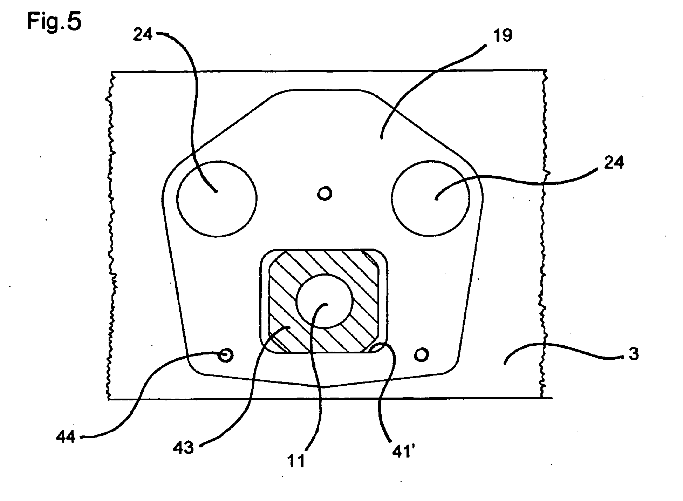

Figur 4 zeigt einen Ausschnitt der Getriebewanne (3) mit Getriebe (10). In der Getriebewanne (3) befinden sich nebeneinander angeordnet die Stirnräder (9) und (13). Über diese Stirnräder (9, 13) werden die nicht dargestellten Zinkenträger (6) angetrieben, die in der Getriebewanne (3) gelagert sind. Die Deckel (24) verhindern, dass Schmutz in die Lagergehäuse der Zinkenträger (6) gelangen kann. An der Getriebewanne (3) sind Konsolen (29) angeordnet, die für die Aufnahme des nicht dargestellten Dreipunktturmes (30) dienen. Die Getriebewanne (3) weist weitere Befestigungskonsolen (34') auf, an denen diverse Zubehörteile und Schutzvorrichtungen angeschraubt werden können. Die mit der Getriebewanne (3) gemäß Figur 5 verschweißte Flanschkonsole (19) weist Gewindebohrungen (44) auf, mit denen das Getriebe (10) über den Flansch (20) mit Hilfe der Schrauben (23) befestigt ist. Der Flansch (20) weist Langlöcher (25) auf.

Das Getriebe (10) kann in den Langlöchern (25) seitlich verschoben werden, so dass das Ritzel (12) der Antriebswelle (11) wechselweise mit Stirnrädern (9, 13) in Eingriff gebracht werden kann, die unmittelbar zueinander benachbart sind. Über eine Stelleinrichtung (28) kann das Getriebe (10) einfach verschoben und in der jeweiligen Eingriffsstellung fixiert werden. Die Stelleinrichtung (28) weist dazu einen Augenschraube (26) und Muttern (27) auf.

Figur 5 zeigt weiter eine Detailansicht der Flanschkonsole (19). Sie verdeutlicht auch wie die Getriebekulisse (43) in der Kulissenführung (41') geführt ist und das Getriebe (10) so insgesamt parallel zur Getriebewanne (3) geführt ist.

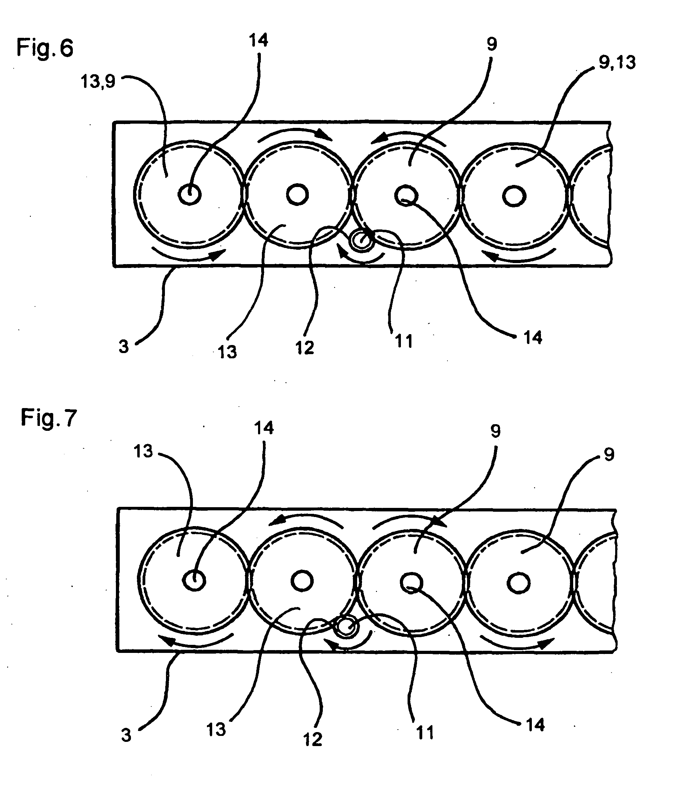

Figur 6 zeigt eine Detailskizze der Getriebewanne (3). Sie verdeutlicht insbesondere, dass alle Stirnräder (9, 13) unmittelbar miteinander in Eingriff stehen und um ihre Rotorwellen (14) drehbar gelagert sind, und zwar wechselweise im Uhrzeigersinn oder entgegen dem Uhrzeigersinn. Die im Uhrzeigersinn drehende Antriebswelle (11) mit Ritzel (12) treibt hier das Stirnrad (9) an, das entgegen dem Uhrzeigersinn angetrieben wird.

Figur 7 zeigt eine vergleichbare Figur wie Figur 6, jedoch steht hier das Ritzel (12) mit dem zum zuvor beschriebenen Stirnrad (9) benachbarten Stirnrad (13) in Eingriff. Alle in der Getriebewanne (3) befindlichen Stirnräder (9, 13) weisen nun einen entgegengesetzten Drehsinn auf, als in Figur 6 dargestellt.

## Patentansprüche

1. Kreiselegge (1) mit Getriebewanne (3) mit mindestens drei Stirnrädern (9), die verdrehfest mit Rotorwellen (5) verbunden sind, die wiederum in der Getriebewanne (3) über Lager (7), (8) gelagert sind, wobei die einzelnen Stirnräder (9) nebeneinander angeordnet sind und miteinander im Eingriff stehen, mit einem Getriebe (10), das oberhalb der Getriebewanne (3) angeordnet ist und eine vertikal angeordnete, auf die Stirnräder (9) einwirkende Antriebswelle (11) aufweist,
**dadurch gekennzeichnet,**
**dass** die vertikal angeordnete Antriebswelle (11) versetzt zu den Rotorwellen (5) angeordnet in die Getriebewanne (3) hineinragt und endseitig ein Ritzel (12) aufweist, das im Durchmesser kleiner ausgebildet ist als die Stirnräder (9), dass das Ritzel (12) im Eingriff mit einem der benachbarten Stirnräder (13), (9) steht und dass die vertikal angeordnete Antriebswelle (11) in Arbeitsrichtung der Kreiselegge (1) vor oder hinter der Rotorwelle (5), (14) der benachbarten Stirnräder (9), (13) angeordnet ist und dass das Getriebe (10) versetzbar auf der Getriebewanne (3) angeordnet ist, und zwar so, dass das Ritzel (12) wechselweise mit dem einen Stirnrad (9) oder dem anderen benachbarten Stirnrad (13) in Eingriff stehend eine Drehrichtungsumkehr bewirkend ausgebildet ist.

2. Kreiselegge nach Anspruch 1,
**dadurch gekennzeichnet,**
**dass** die vertikal angeordnete Antriebswelle (11) in Arbeitsrichtung vor oder hinter der ersten Rotorwelle (14) des ersten Stirnrades (13) angeordnet ist, und zwar um 5 cm bis 12 cm seitlich versetzt.

3. Kreiselegge nach einem der vorhergehenden Ansprüche,
**dadurch gekennzeichnet,**
**dass** die vertikal angeordnete Antriebswelle (11) unmittelbar oberhalb des Ritzels (12) gelagert und die Lagerung (15) Bestandteil des Getriebes (10) bzw. unmittelbar mit dem Getriebe (10) verbunden ist.

4. Kreiselegge nach einem der vorhergehenden Ansprüche,
**dadurch gekennzeichnet,**
**dass** die Rotorwelle (5), (14) an ihrem unteren Ende einen Zinkenträger (6) für die Aufnahme von Zinken (4) aufweist und dass die Rotorwelle (5, 14) und der Zinkenträger (6) als ein Teil ausgebildet sind, vorzugsweise als geschmiedetes Teil.

5. Kreiselegge nach Anspruch 1,
**dadurch gekennzeichnet,**
**dass** das Getriebe (10) in einer Kulissenführung (41) geführt und in die jeweilige Eingriffsstellung verschiebbar ausgebildet ist.

6. Kreiselegge nach einem der vorhergehenden Ansprüche,
**dadurch gekennzeichnet,**
**dass** eine Parallelführung vorgesehen ist, über die das Getriebe parallel verschiebbar auf dem Räderkasten (3) angeordnet ist.

7. Kreiselegge nach Anspruch 1,
**dadurch gekennzeichnet,**
**dass** das Getriebe (10) als Wechselradgetriebe ausgebildet ist

8. Kreiselegge nach Anspruch 1,
**dadurch gekennzeichnet,**
**dass** das Getriebe (10) als Schaltgetriebe mit veränderbaren Getriebeübersetzungen ausgebildet ist.

9. Kreiselegge nach Anspruch 1,
**dadurch gekennzeichnet,**
**dass** das Getriebe (10) in seiner jeweiligen Eingriffsstellung arretierbar oder fixierbar ausgebildet ist.

## Claims

1. A rotary harrow (1) with a gear case (3) with at least three spur gears (9) which are connected in a torsionally rigid manner to rotor shafts (5) which in turn are mounted in the gear case (3) via bearings (7), (8), wherein the individual spur gears (9) are disposed side by side and are in mesh with one another, with a gear unit (10) which is disposed above the gear case (3) and has a vertically disposed drive shaft (11) which acts on the spur gears (9),
**characterized in that**
the vertically disposed drive shaft (11), being offset relative to the rotor shafts (5), projects into the gear case (3) and at the end has a pinion (12) which is smaller in diameter than the spur gears (9), that the pinion (12) is in mesh with one of the adjacent spur gears (13), (9), and that the vertically disposed drive shaft (11) is disposed before or after the rotor shaft (5), (14) of the adjacent spur gears (9), (13) in the working direction of the rotary harrow (1), and that the gear unit (10) is disposed on the gear case (3) in a displaceable manner such that the pinion (12), being alternately in mesh with one spur gear (9) or the other adjacent spur gear (13), is formed to effect a reversal of the direction of rotation.

2. The rotary harrow according to Claim 1,
**characterized in that**
the vertically disposed drive shaft (11) is disposed before or after the first rotor shaft (14) of the first spur gear (13) in the working direction, being laterally offset by 5 cm to 12 cm.

3. The rotary harrow according to any one of the preceding Claims,
**characterized in that**
the vertically disposed drive shaft (11) is mounted directly above the pinion (12), and the mounting (15) is a component part of the gear unit (10) or is directly connected to the gear unit (10).

4. The rotary harrow according to any one of the preceding Claims,
**characterized in that**
the rotor shaft (5), (14) has a tine carrier (6) for holding tines (4) at its bottom end, and that the rotor shaft (5, 14) and the tine carrier (6) are formed as one part, preferably as a forged part.

5. The rotary harrow according to Claim 1,
**characterized in that**
the gear unit (10) is guided in a slotted guide (41) and formed so as to be displaceable into the respective mesh position.

6. The rotary harrow according to any one of the preceding Claims,
**characterized in that**
a parallel guide is provided, via which the gear unit is disposed so as to be displaceable in a parallel manner on the gear case (3).

7. The rotary harrow according to Claim 1,
**characterized in that**
the gear unit (10) is formed as a change gear unit.

8. The rotary harrow according to Claim 1,
**characterized in that**
the gear unit (10) is formed as a shift gear unit with variable gear ratios.

9. The rotary harrow according to Claim 1,
**characterized in that**
the gear unit (10) is formed so that it can be arrested or fixed in its respective meshing position.

## Revendications

1. Herse rotative (1) avec cuve d'engrenage (3) avec au moins trois roues cylindriques (9) reliées de manière à ne pas pouvoir se gauchir avec des arbres à rotor (5) qui pour leur part sont logés dans la cuve d'engrenage (3) par l'intermédiaire de paliers (7), (8), étant donné que les différentes roues cylindriques (9) sont disposées l'une à côté de l'autre et sont l'une avec l'autre en prise avec un train d'engrenages (10) qui est disposé au-dessus de la cuve d'engrenage (3) et présente un arbre d'entraînement (11) disposé verticalement et agissant sur les roues cylindriques (9),
**caractérisée en ce que**
l'arbre d'entraînement (11) disposé verticalement entre, décalé par rapport aux arbres à rotor (5), dans la cuve d'engrenage (3) et présente au bout un pignon (12) dont le diamètre est plus petit que celui des roues cylindriques (9), **en ce que** le pignon (12) est en prise avec l'une des roues cylindriques (13), (9) avoisinantes, et **en ce que** l'arbre d'entraînement (11) disposé verticalement est disposé dans le sens de travail de la herse rotative (1) en amont ou en aval de l'arbre à rotor (5), (14) des roues cylindriques (9), (13) avoisinantes, et **en ce que** le train d'engrenages (10) est disposé de façon à pouvoir être décalé sur la cuve d'engrenage (3) de manière à ce que le pignon (12) soit alternativement en prise avec la roue cylindrique (9) ou l'autre roue cylindrique voisine (13) et provoque un inversement du sens de rotation.

2. Herse rotative selon la revendication 1,
**caractérisée en ce que**
l'arbre d'entraînement (11) disposé verticalement est disposé dans le sens de travail en amont ou en aval du premier arbre à rotor (14) de la première roue cylindrique (13), décalé latéralement de 5 cm à 12 cm.

3. Herse rotative selon l'une quelconque des revendications précédentes,
**caractérisée en ce que**
l'arbre d'entraînement (11) disposé verticalement est logé directement au-dessus du pignon (12) et le logement (15) est partie intégrante du train d'engrenages (10) ou est directement relié au train d'engrenages (10).

4. Herse rotative selon l'une quelconque des revendications précédentes,
**caractérisée en ce que**
l'arbre à rotor (5), (14) présente à son extrémité inférieure un support de dents (6) pour le logement de dents (4) et **en ce que** l'arbre à rotor (5, 14) et le support de dents (6) sont formé comme une pièce, de préférence comme pièce forgée.

5. Herse rotative selon la revendication 1,
**caractérisée en ce que**
le train d'engrenages (10) est guidé dans un guide-coulisse (41) et est décalable dans chaque position de prise.

6. Herse rotative selon l'une quelconque des revendications précédentes,
**caractérisée en ce que**
est prévu un guide parallèle au moyen duquel le train d'engrenages est disposé de manière à pouvoir être décalé sur le passage de roue (3).

7. Herse rotative selon la revendication 1,
**caractérisée en ce que**
le train d'engrenages (10) est formé comme harnais d'engrenage à changement de vitesse.

8. Herse rotative selon la revendication 1,
**caractérisée en ce que**
le train d'engrenages (10) est formé comme engrenage de manoeuvre à rapports variables.

9. Herse rotative selon la revendication 1,
**caractérisée en ce que**
le train d'engrenages (10) peut être bloqué ou fixé dans chaque position de prise.
